# EUROPEAN PATENT APPLICATION

(11) **EP 2 322 419 A1**
(43) Date of publication of application: **18.05.2011**
(21) Application number: 09808352.0
(22) Date of filing: 18.03.2009
(51) Int. Cl.: B63B 1/16

(54) **WING STRUCTURE FOR WIG VEHICLE**

(30) Priority: 20.08.2008 KR 20080081184
(71) Applicant: Wing Ship Technology Corp, Daejeon 305-509 (KR)
(72) Inventor: KANG, Chang Gu, Daejeon 305-340 (KR); LEE, Han Jin, Daejeon 305-707 (KR); LEE, Chang Min, Daejeon 305-325 (KR)
(74) Representative: Cabinet Plasseraud
(86) International application number: PCT/KR2009/001357
(87) International publication number: WO 2010/021446

(57) **Abstract**

The present invention relates to a wing structure for a WIG vehicle. More specifically, the wing structure of a WIG vehicle comprises left and right main wings, left and right downward wings, and a rudder unit. The left and right main wings protrude out from the central portions of left and right sides of the WIG vehicle. The panel of the main wing is flat and tapers successively toward the lateral edge, whereof the cross-section is airfoil-shaped and has the shape of a tadpole. The panel shaped left and right downward wings are connected with both ends of the left and right main wings without a joint and are formed heading downward to suppress vortex and guidance drag generated in both ends of the main wings. The rudder units are mounted on the rear surface of the left and right downward panels with a slight gap in order to compensate asymmetry between left and right lateral ends caused by movement under control of the fuselage driving unit of the WIG vehicle and to turn the fuselage left or right. Therefore, the wing structure of the WIG vehicle is capable of minimizing vortex and guidance drag generated in both ends of the left and right main wings by maximizing ground effect. Additionally, the wing structure has advantages for absorbing impact from the fuselage when taking off and landing and stabilizing horizontal disturbance of the fuselage because the left and right downward wings occupy much more volume than a winglet.

## Description

### [Technical Field]

The present invention relates, in general, to a wing structure for a WIG (wing in ground) craft and, more particularly, to a wing structure for a WIG craft in which vertical downward panels are formed seamlessly on both ends of the left and right main wings so as to suppress vortices and induced drag that are generated on both the ends of the left and right main wings, and in which asymmetry in thrust, which is between the left and right lateral ends when the WIG craft moves, is compensated under the control of a driving unit of the body of the WIG craft, thereby preventing yawing of the WIG craft and securing stability without using a vertical tail wing.

### [Background Art]

Generally, aircraft uses a large vertical tail wing in order to secure stability with respect to yawing and compensate for asymmetry in thrust between the left and right lateral ends. This conforms to aircraft regulations and is implemented for enabling the aircraft to operate even when either one of the left and right propellers malfunctions. However, since upon engine failure, WIG craft can make an emergency landing on the surface of the water and implement required emergency measures and corrective maintenance, unlike other aircraft, WIG craft does not need a large vertical tail wing. Thus, provided that instead of the vertical tail wing, means for ensuring stability with respect to yawing is presented, the body of the WIG craft can be streamlined by removing the vertical tail wing. The vertical tail wing, mounted on a rear portion of the body of the WIG craft, in general is provided with a rudder, so that when the WIG craft operates, air resistance and therefore fuel consumption problematically increase.

However, a substitute for the vertical tail wing has not yet been developed.

In the meantime, the present invention relates to an end plate structure that extends downwards from both ends of main wings of the WIG craft. Generally, vortices are generated on both ends of the main wings of the WIG craft, and this increases the flight resistance. Thus, a wing structure is required to suppress the generation of vortices while providing other functionalities.

The end plate which is currently used in the WIG craft only serves to suppress the vortices and has no additional capacity and functions, so that it generally is only mounted within the limits of suppressing the vortices. Thus, there is a need to provide an improved end plate to increase lift and thrust and ensure a stable flight when the WIG craft moves.

### [Disclosure]

### [Technical Problem]

Accordingly, the present invention has been made keeping in mind the above problems occurring in the related art, and is intended to provide a wing structure for a WIG craft that is capable of suppressing vortices and induced drag generated on both ends of the left and right main wings, and compensating for asymmetry in thrust, which is between the left and right lateral ends when the WIG craft moves, under the control of a driving unit of the body of the WIG craft.

Another object of the present invention is to provide a wing structure for a WIG craft in which a vertical tail wing is removed from a rear portion of the body of the WIG craft to reduce the weight of the WIG craft and make the overall configuration of the WIG craft have a slim streamline, and a rudder is mounted on a rear surface of the left and right downward wings to ensure stability with respect to yawing through turning to the left or right from the body of the WIG craft.

### [Technical Solution]

In an aspect, the present invention provides a wing structure for a WIG craft including: a main wing protruding outwards from the side middle portion of the body of the WIG craft; a downward wing seamlessly extending vertically downwards from an outer end of the main wing; a horizontal tail wing extending horizontally outwards from a rear portion of the body of the WIG craft; and a vertical tail wing vertically extending from an axis of the body of the WIG craft where the horizontal tail wing is mounted, wherein the downward wing has a vertical cross sectional shape of a streamline in which a frontal section including a leading edge is shaped like a round with a proper thickness in order to prevent flow separation from occurring, and a rear section including a tailing edge shaped like a converging section that converges from a thickened portion into the tailing edge that sharply extends in a linear line, wherein the thickened portion is positioned at a position of "(3 to 4)/10" from the leading edge in the length of the streamline in the lengthwise direction from the leading edge to the tailing edge.

In another embodiment, there is provided a wing structure for a WIG craft, including: a main wing protruding outwards from the side middle portion of the body of the WIG craft; a downward wing seamlessly extending vertically downwards from an outer end of the main wing; and a horizontal tail wing extending horizontally outwards from the rear portion of the body of the WIG craft, wherein the downward wing includes a downward panel integrally extending downwards from the end of the main wing, and a rudder unit movably mounted onto a rear surface of the downward panel, wherein the downward wing including the rudder unit has a vertical cross sectional shape of a streamline in which a frontal section including a leading edge is shaped like a round with a proper thickness in order to prevent flow separation from occurring, and a rear section including a tailing edge is shaped like a converging section that converges from a thickened portion into the tailing edge that sharply extends in a linear line, so that the entire downward wing has the vertical cross sectional shape of an airfoil.

In an exemplary embodiment, the horizontal tail wing includes a horizontal safety plate as a fixed type horizontal panel, and a movable elevator unit mounted on a rear surface of the horizontal safety plate, wherein the elevator unit has a vertical cross sectional shape of a streamline in which a frontal section including a leading edge is shaped like a round with a proper thickness in order to prevent flow separation from occurring, and a rear section including a tailing edge is shaped like a converging section that converges from a thickened portion into the tailing edge that sharply extends in a linear line, so that the entire horizontal tail wing has the vertical cross sectional shape of an airfoil.

In an exemplary embodiment, the shape of a lower portion of the downward wing is shaped like an arch or a streamlined "V" so as to minimize the friction force against the surface of the water or air on the surface of the water.

In an exemplary embodiment, the downward wing is made of carbon fiber aluminum.

In an exemplary embodiment, the main wing has an internal structure that includes a plurality of airfoil-shaped ribs, which is connected between the leading edge and the tailing edge, and a plurality of panel-shaped spars, which intersects with the ribs.

### [Advantageous Effects]

The wing structure for a WIG craft according to the present invention is capable of suppressing vortices and induced drag generated on both ends of the left and right main wings while increasing lift and thrust, and compensating for asymmetry in thrust, which is between the left and right lateral ends when the WIG craft moves, under the control of the driving unit of the body of the WIG craft. Further, the vertical tail wing is removed from the rear portion of the body of the WIG craft to advantageously reduce the weight of the WIG craft, and the rudder is mounted on the rear surface of the left and right downward wings to advantageously ensure stability with respect to yawing through turning to the left or right from the body of the WIG craft.

### [Description of Drawings]

FIG. 1 is a perspective view showing a first embodiment of a wing structure of the present invention;
FIG. 2 is a perspective view showing a second embodiment of a wing structure of the present invention;
FIG. 3 is a cut perspective view showing a main wing and a downward wing of the wing structure shown in FIGS. 1 and 2;
FIG. 4 is a perspective view showing the inside of the main wing shown in FIG. 3 having ribs and spars;
FIGS. 5 and 6 are views showing lower sections of the downward wing;
FIG. 7 is a perspective view showing a third embodiment of a wing structure of the present invention;
FIGS. 8 and 9 are perspective views showing a main wing and a downward wing of the wing structure shown in FIG. 7;
FIG. 10 is a cut perspective view showing a lower section of the downward wing shown in FIGS. 8 and 9;
FIG. 11 is a perspective view showing the inside of the downward wing according to the third embodiment;
FIG. 12 is a perspective view showing a fourth embodiment of a wing structure of the present invention;
FIGS. 13 and 14 are cut perspective views showing a main wing and a downward wing of the wing structure shown in FIG. 12;
FIGS. 15 and 16 are views showing a lower section of the downward wing;
FIG. 17 is a side view showing a WIG (wind in ground) craft according to the present invention;
FIG. 18 is a conceptual scheme explaining the control of yawing using the downward wing according to the present invention; and
FIG. 19 is a cross-sectional view showing an airfoil-shaped wing using a lift face of an end plate.

| < Major Reference Numerals of the Drawings> | |
|---|---|
| 100: Body of WIG craft | 200: Main Wing |
| 300: Downward Wing | 310: Downward Panel |
| 320: Rudder Unit | 400: Horizontal Tail Wing |
| 410: Horizontal Stabilizer | 420: Elevator Unit |
| 500: Vertical Tail Wing | 600: Canard |

### [Best Mode]

Hereinafter, The wing structure for a WIG (wing in ground) craft according to the present invention will be described in detail with reference to the accompanying drawings.

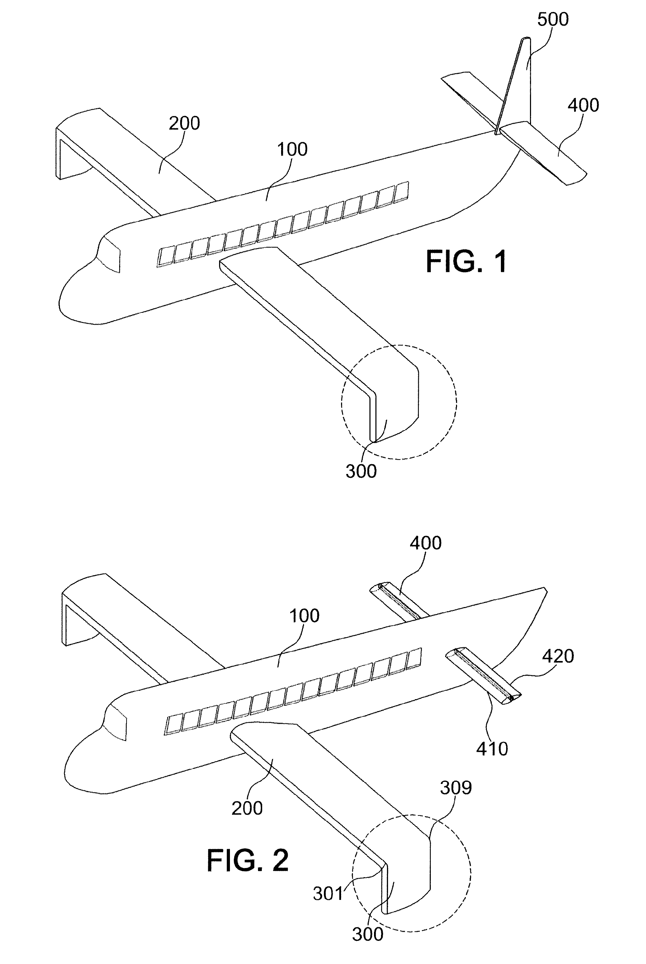

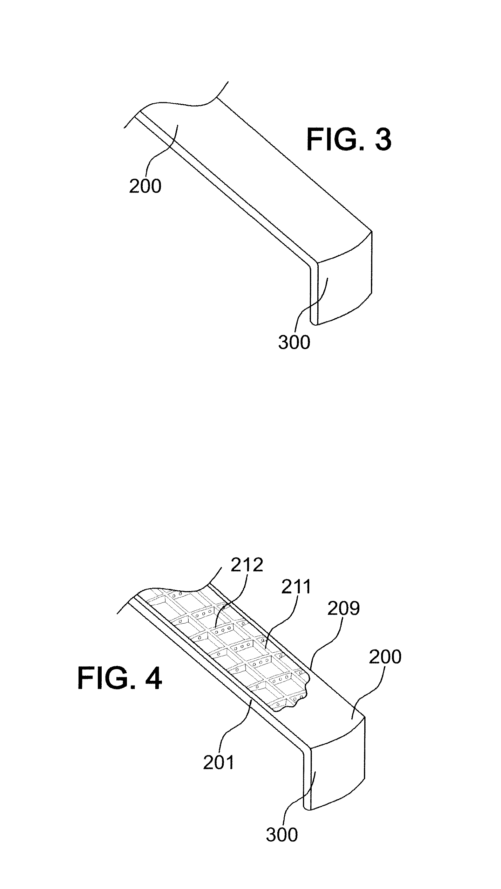

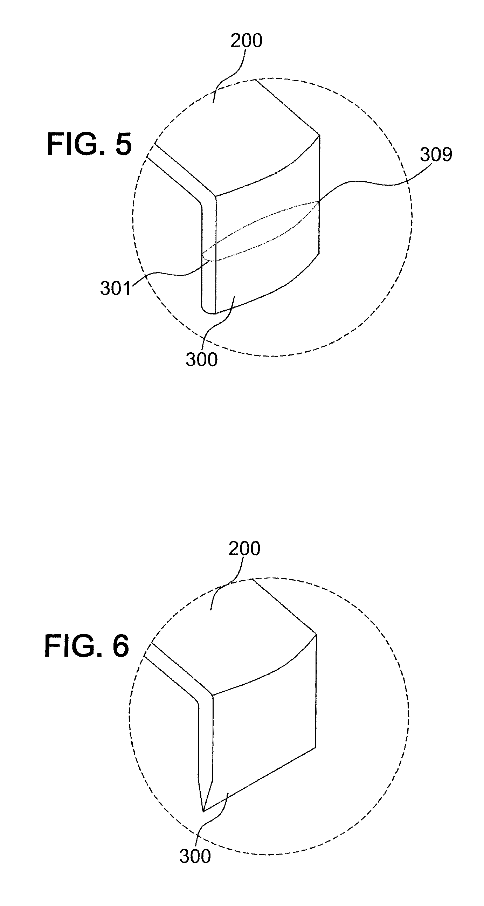

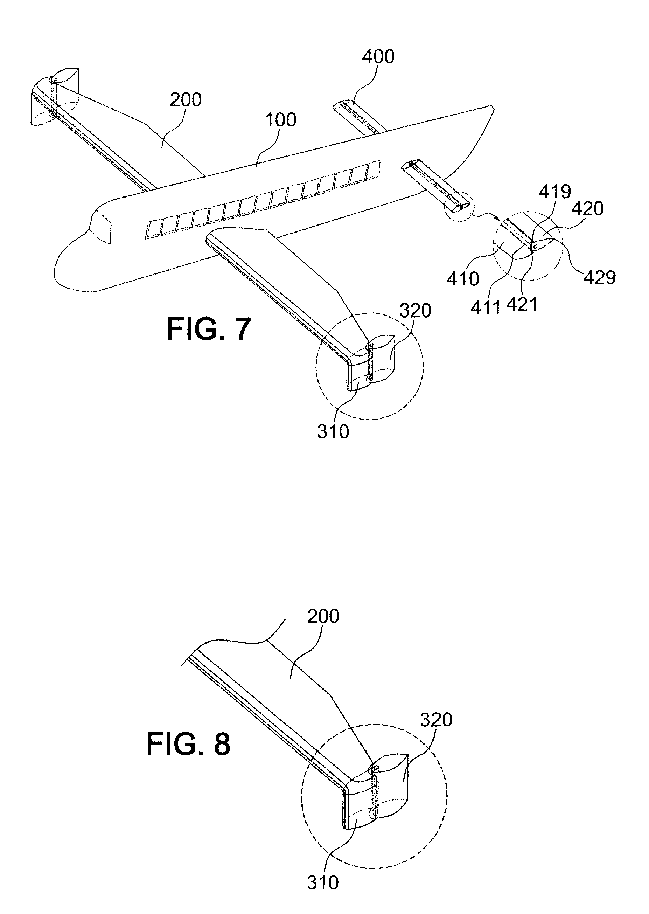

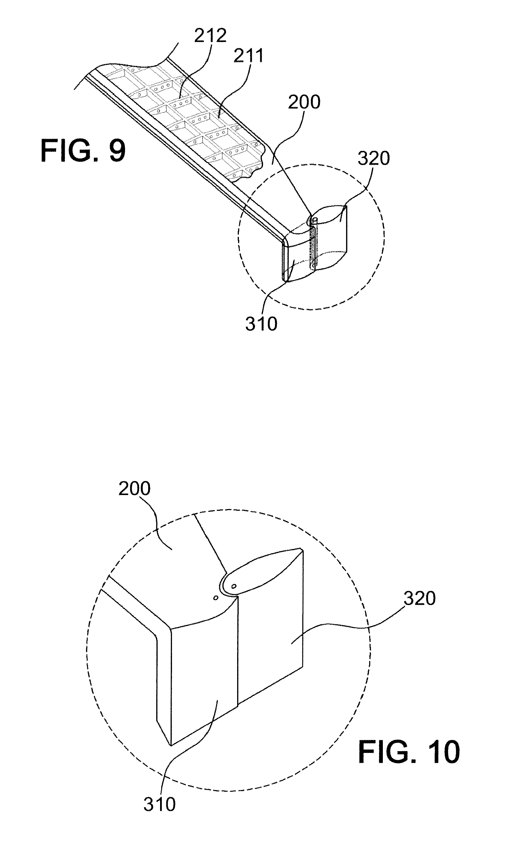

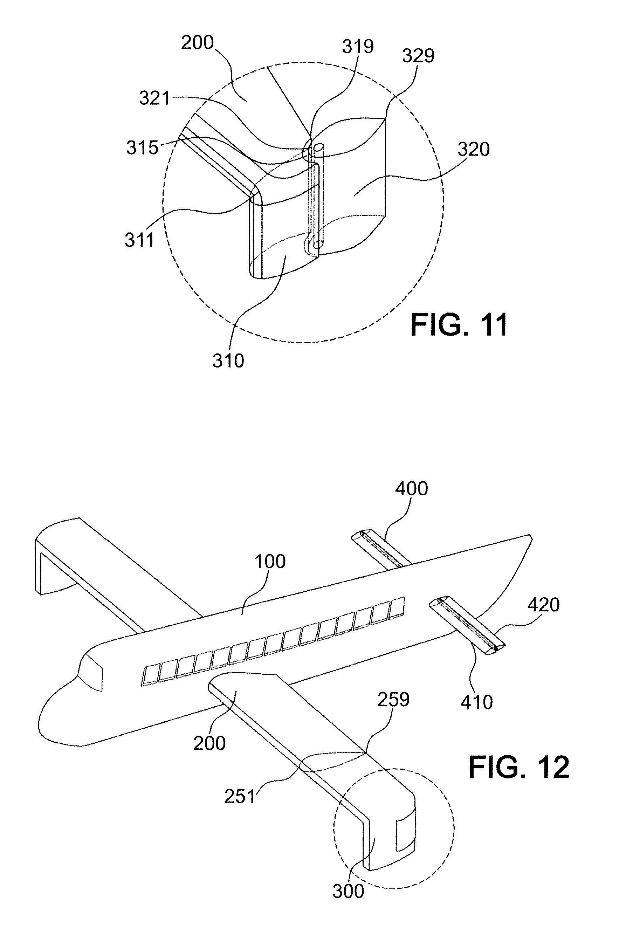

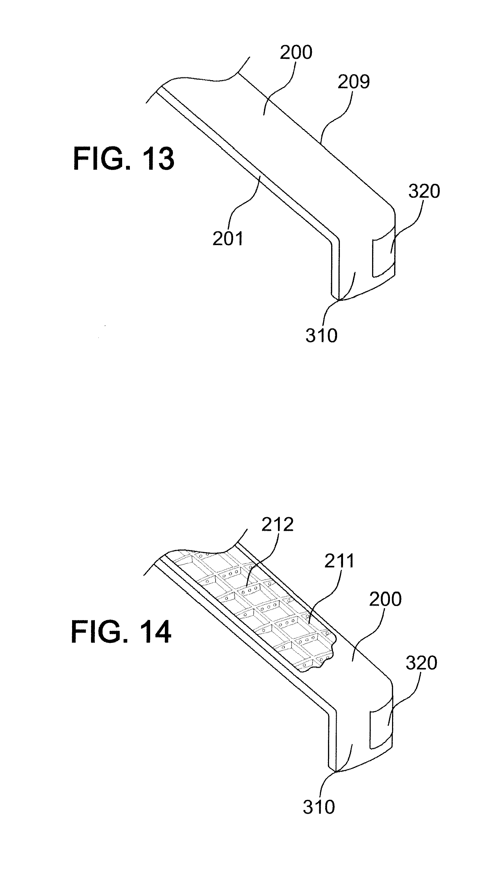

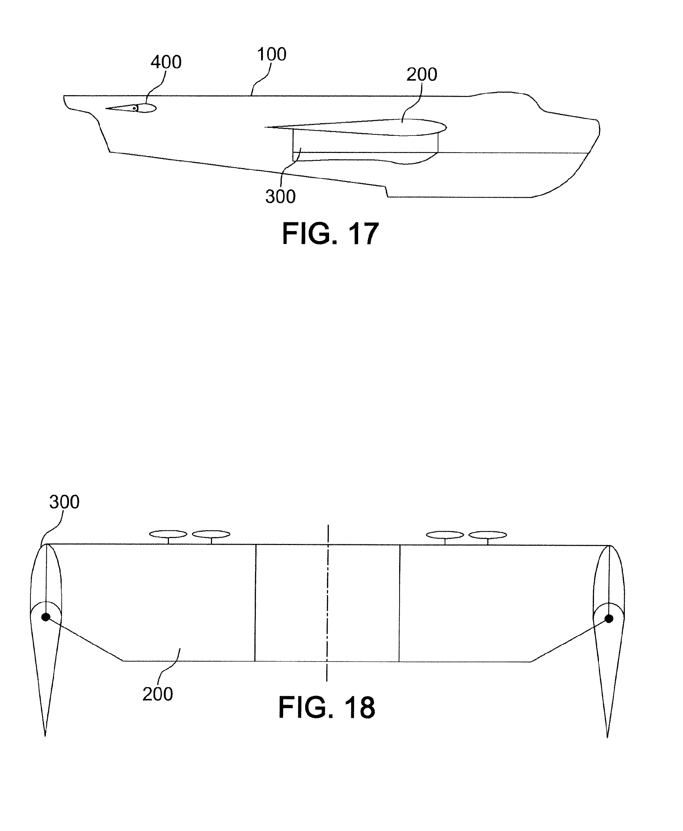

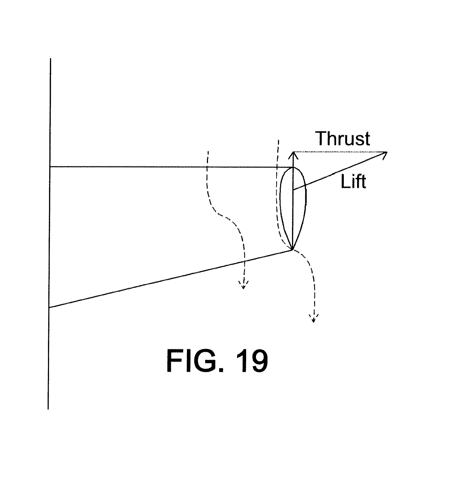

FIG. 1 is a perspective view showing a first embodiment of a wing structure of the present invention; FIG. 2 is a perspective view showing a second embodiment of a wing structure of the present invention; FIG. 3 is a cut perspective view showing a main wing and a downward wing of the wing structure shown in FIGS. 1 and 2; FIG. 4 is a perspective view showing the inside of the main wing shown in FIG. 3 having ribs and spars; FIGS. 5 and 6 are views showing lower sections of the downward wing; FIG. 7 is a perspective view showing a third embodiment of a wing structure of the present invention; FIGS. 8 and 9 are perspective views showing a main wing and a downward wing of the wing structure shown in FIG. 7; FIG. 10 is a cut perspective view showing a lower section of the downward wing shown in FIGS. 8 and 9; FIG. 11 is a perspective view showing the inside of the downward wing according to the third embodiment; FIG. 12 is a perspective view showing a fourth embodiment of a wing structure of the present invention; FIGS. 13 and 14 are cut perspective views showing a main wing and a downward wing of the wing structure shown in FIG. 12; FIGS. 15 and 16 are views showing a lower section of the downward wing; FIG. 17 is a side view showing a WIG (wind in ground) craft according to the present invention; FIG. 18 is a conceptual scheme explaining the control of yawing using the downward wing according to the present invention; and FIG. 19 is a cross-sectional view showing an airfoil-shaped wing using a lift face of an end plate.

The wing structure for a WIG craft to be described with reference to the accompanying drawings is a bilaterally symmetric structure about an axis of the body of the WIG craft. Thus, even though a description is made of either the left or right wing structure, the other side wing structure also has the same structure as that described.

First, FIG. 1 shows the first embodiment of the wing structure for a WIG craft, which includes a main wing 200 protruding outwards from the side middle portion of the body of the WIG craft, a downward wing 300 seamlessly extending vertically downwards from an outer end of the main wing 200, a vertical tail wing 400 extending horizontally outwards from a rear portion of the body of the WIG craft 100, and a vertical tail wing 500 vertically extending from an axis of the body of the WIG craft where the horizontal tail wing 400 is mounted.

In this case, the downward wing 300 includes a frontal section including a leading edge and a rear section including a tailing edge, wherein the frontal section has a round cross sectional shape with a proper thickness in order to prevent flow separation from occurring, and the rear section has a converging section that converges from a thickened portion into the tailing edge that sharply extends in a linear line.

That is, while the conventional downward wing is shaped as a linear panel with a constant thickness, the downward wing of the first embodiment is formed as a streamline shaped like an airfoil, thereby serving to suppress vortices and increase thrust. More particularly, underneath a wing, there generally is a fluid flow flowing from inside towards outside, so that if an end plate or a downward winglet is arranged in a vertical direction from an end of the wing, the fluid flow under the wing has a specified incidence angle (an angle of attack) with respect to the end plate or the downward winglet, thereby creating lift at the end plate or the downward winglet. Such lift has a first force component in the traveling direction of the WIG craft and a second force component in the horizontal direction, and the first force component in the traveling direction serves to increase thrust. Thus, if the end plate has the cross section of an airfoil, which is the general shape of a wing, the creation of lift can be maximized.

That is to say, the leading edge of the lift face of the end plate is a round shape with a proper thickness to prevent flow separation and the tailing edge of the lift face of the end plate is a sharply converged form in which upon flow separation, lift is maximized thereby serving to reducing air resistance and increase thrust due to suppression of vortices. Further, the configuration of the downward wing occupies much more volume than the conventional end plate. Thus, the wing structure has advantages for absorbing impact upon take off and landing and ensuring stability with respect to yawing, so that it also serves as a float that is provided in WIG craft or hydroplanes as an auxiliary landing unit shaped like e.g. a ski. That is, the downward wing can also be used as the float by configuring itself to be streamlined, so that the WIG craft can be made into a simpler structure.

The second embodiment of the wing structure and the configuration of the downward wing will now be described in detail with reference to FIGS. 2 to 6.

As compared to the first embodiment, in the second embodiment, the vertical tail wing is removed, the horizontal tail wing, which had been mounted to the end portion of the body of the WIG craft, is mounted at the rear side of the body that is positioned forward from the end portion, and the shape and structure of the horizontal tail wing are modified.

Particularly, the downward wing 300 is seamlessly connected to an end of the main wing 200 such that it extends downwards from the end of the main wing. The downward wing has a streamlined cross sectional shape in which a leading edge 301 is formed as a smooth round, and in the lengthwise direction from the leading edge 301 to the tailing edge 309, the width of the streamline increases from the vertex of the leading edge 301 to a position of "(3 to 4)/10" of the length of the streamline, and the width of the streamline decreases from the position of "(3 to 4)/10" of the length of the streamline to the tailing edge 309 and finally sharply converges on the vertex of the tailing edge.

In this case, as shown in FIG. 4, the main wing 200 has the internal structure that includes a plurality of airfoil-shaped ribs 212, which is connected between a leading edge 201 and a tailing edge 209, and a plurality of panel-shaped spars 211, which intersects with the ribs 212. The internal structure of the main wing serves to increase lift. Further, the internal structure can be utilized as a fuel tank or a shipping space in which parcels can be stored.

The shape of the lower portion of the downward wing is preferably shaped like an arch or a streamlined "V" so as to minimize the friction force against the surface of the water or the ground. The third embodiment of the wing structure for a WIG craft will now be described with reference to FIGS. 7 to 11.

As shown in the drawings, the wing structure for a WIG craft includes a main wing 200 protruding outwards from the side middle portion of the body of the WIG craft, a downward wing 300 seamlessly extending vertically downwards from an outer end of the main wing 200, and a horizontal tail wing 400 extending horizontally outwards from the rear portion of the body of the WIG craft. The downward wing 300 includes a downward panel 310 integrally extending downwards from the end of the main wing 200, and a rudder unit 320 movably mounted onto a rear surface of the downward panel 310. Here, the downward wing 300, including the rudder unit 320, includes a frontal section including a leading edge 321 and a rear section including a tailing edge 329, wherein the frontal section has a round cross sectional shape with a proper thickness in order to prevent flow separation from occurring, and the rear section has a converging section that converges from a thickened portion into the tailing edge that sharply extends in a linear line, so that the entire downward wing 300 has the cross sectional shape of an airfoil that is shaped like a tadpole.

The configuration of the downward wing 300 including the fixed downward panel and the movable rudder unit 320 coupled thereto is implemented so as to control yawing of the WIG craft by using the downward wing 300, instead of the vertical tail wing.

That is, in the case that a wing is arranged on an upper side of the body of the WIG craft, a relatively large downward wing 300 needs to be mounted to maximize the ground effect. In this case, the shape of the lift face is applied and a driving unit 320 such as a rudder of a vertical tail wing is mounted onto the rear surface of the lift face. The operation of the driving unit 320 prevents yawing by ensuring stability and compensates for asymmetry in thrust between the left and right sides. In this case, the vertical tail wing is removed and the horizontal tail wing 400 is mounted on an upper side of the body of the WIG craft.

Specifically, according to the third embodiment, the wing structure includes the main wing 200 protruding outwards from the side middle portion of the body 100 of the WIG craft, the downward wing 300 seamlessly extending vertically downwards from the outer end of the main wing 200, and the horizontal tail wing 400 extending horizontally outwards from the rear portion of the body.

Here, the downward panel 310 is a fixed type panel that seamlessly extends vertically downwards from the end of the main wing 200, and the rudder unit 320 is a movable unit that is mounted onto the rear surface of the downward panel 310 in order to turn the body of the WIG craft to the left or right side.

The horizontal tail wing 400 includes a horizontal safety plate 410 extending horizontally outwards from the rear portion of the body 100 of the WIG craft, and an elevator unit 420 mounted on a rear surface of the horizontal safety plate 410 in order to raise or lower the body 100 of the WIG craft. The structures of the downward wing 300 and the horizontal tail wing 400 will now be described in more detail.

In the operation state, the main wing 200, the downward panel 310, and the horizontal safety plate 410 are provided in a fixed type, and the rudder unit 320 to turn the body 100 to the left or right side and the elevator unit 420 to raise or lower the body 100 are provided in a movable type.

That is, a tailing edge 329 of the rudder unit 320 can be turned to the left or right side, and a tailing edge 429 of the elevator unit can be raised or lowered, thereby providing stability with respect to yawing and compensating for asymmetry in thrust between the left and right sides.

Thus, the wing structure of the WIG craft in which the vertical tail wing for controlling yawing is removed can be obtained.

The main wing 200 is composed of a plurality of panels sequentially arranged outwards from the side middle portion of the body 100 of the WIG craft such that it tapers successively so that a width between the leading edge 201 and the tailing edge 209 decreases as it protrudes towards its outer end. The main wing also has the cross sectional shape of a streamlined airfoil of a conventional airplane that is shaped like a tadpole, in which the leading edge 201 is formed as a horizontal line in a plan view and a smooth round in a front view, and in the lengthwise direction from the leading edge 201 to the tailing edge 209, the vertical width of the streamline increases from the vertex of the leading edge 201 to a position of "(3 to 4)/10" of the length of the streamline, and the vertical width of the streamline decreases from the position of "(3 to 4)/10" of the length of the streamline to the tailing edge 209 and finally sharply converges on the vertex of the tailing edge 209. Here, the main wing 200 has a vertical cross sectional shape like a tadpole and is preferably made of carbon fiber aluminum.

The downward panel 310 is configured so that the leading edge 311 has the horizontal cross sectional shape like a smooth round and the tailing edge 319 converges on two sharply separated vertices. Here, in a plan view, vertical groove 315 is formed between the two vertices.

Here, preferably, the downward panel 310 is made of carbon fiber aluminum, and the shape of the lower portion of the downward panel is shaped like an arch or a streamlined "V" so as to minimize the friction force against the surface of the water or the ground.

The rudder unit 320 is mounted in the groove 315 of the downward panel 310 with a certain gap, as a driving unit that is movable in a certain direction. The rudder unit is configured so that the leading edge 321 has the horizontal cross sectional shape of a round and the tailing edge 329 converges on a single sharp vertex. Preferably, the rudder unit is composed of a vertically linear panel that has the horizontal cross sectional shape of a tadpole, is made of carbon fiber aluminum, and the lower portion thereof is shaped like an arch or a streamlined "V."

Further, it is preferred that when the tailing edge 329 of the rudder unit 320 is turned to the left or right side by the manipulation of the driving unit, the turning is enabled without interference of the round of the leading edge 321 of the rudder unit 320 with the groove.

In the meantime, the horizontal tail wing 400 includes the fixed horizontal safety plate 410 and the movable elevator unit 420. The horizontal safety plate is composed of a panel arranged outwards from the rear portion of the body 100 such that it tapers successively so that a width between the leading edge 411 and the tailing edge 419 decreases as it protrudes towards its outer end. The horizontal safety plate also has the cross sectional shape of a streamlined airfoil of a conventional airplane that is shaped like a tadpole, in which the leading edge 411 has a vertical cross sectional shape like a smooth round and the tailing edge 419 converges on two sharply separated vertices. Here, in a plan view, vertical groove 415 is formed between the two vertices. Here, preferably, the horizontal safety plate is made of carbon fiber aluminum.

Here, the elevator unit 420 is mounted in the groove 415 of the horizontal safety plate with a certain gap. The elevator unit is configured so that the leading edge 421 has a round cross sectional shape and the tailing edge 429 converges on a single sharp vertex. Preferably, the elevator unit 420 has the vertical cross sectional shape of a tadpole and is made of carbon fiber aluminum

Further, it is preferred that the elevator unit 420 is mounted in the groove with a certain gap such that when the tailing edge 429 of the elevator unit 420 is turned up and down by the manipulation of the driving unit, the turning is enabled without interference of the round of the leading edge 421 with the groove 415.

As described above, the wing structure for a WIG craft of the third embodiment is configured to include the main wing 200 protruding outwards from the side middle portion of the body, the downward wing 300 extending vertically downwards from the outer end of the main wing 200, and the horizontal tail wing 400 extending horizontally outwards from the rear portion of the body 100, so that unlike the conventional wing structure, it is possible to provide the wing structure without the vertical tail wing.

The shapes of the downward wing, including the downward panel and the rudder unit, and the horizontal tail wing, including the downward wing and the elevator unit, will now be described in detail.

First, the downward panel 310 is configured to have a streamlined shape so that the leading edge 311 is formed as a vertical line in a front view and a smooth round in a plan view, and in the lengthwise direction from the leading edge 311 to the tailing edge 319 of the entire downward wing 300, including the rudder unit, the horizontal width of the streamline increases from the vertex of the leading edge 311 to a position of "(3 to 4)/10" of the length of the streamline, and the horizontal width of the streamline decreases from the position of "(3 to 4)/10" of the length of the streamline to the tailing edge 319 and finally sharply converges on first and second sharp vertices of the tailing edge 319 of the downward panel 310 that are provided in the left and right sides of the tailing edge, wherein the groove 315 is formed between the first and second sharp vertices.

The rudder unit 320 serves to turn the body 100 to the left or right side, and has the cross sectional streamlined shape of a tadpole, so that when the body of the WIG craft is in traveling state, the rudder unit can compensate for asymmetry in thrust between both lateral ends of the left and right main wings 200 through the manipulation of the driving unit.

Specifically, the rudder unit 320 has a cross sectional streamlined shape in which the leading edge 321 is formed as a smooth round in a plan view, and in the lengthwise direction from the leading edge 321 to the tailing edge 329, the horizontal width of the streamline increases from the vertex of the leading edge 321 to a position of "(3 to 4)/10" of the length of the streamline, and the horizontal width of the streamline decreases from the position of "(3 to 4)/10" of the length of the streamline to the tailing edge 319 in conformity with the airfoil shape of the downward wing and finally sharply converges on a third vertex of the tailing edge.

The horizontal safety plate 410 has a cross sectional streamlined shape in which the leading edge 411 is formed as a vertical line in a plan view and a smooth round in a front view, and in the lengthwise direction from the leading edge 411 to the tailing edge 429 of the horizontal tail wing 400, the vertical width of the streamline increases from the vertex of the leading edge 411 to a position of "(3 to 4)/10" of the length of the streamline, and the vertical width of the streamline decreases from the position of "(3 to 4)/10" of the length of the streamline to the tailing edge 429 of the horizontal tail wing and finally sharply converges on fourth and fifth sharp vertices of the tailing edge 419 of the horizontal safety plate 410 that are provided in the upper and lower sides of the tailing edge, wherein the groove 415 is formed between the fourth and fifth sharp vertices.

Further, the elevator unit 420 has the cross sectional streamlined shape of a tadpole and serves to raise or lower the body of the WIG craft. The shape of the elevator unit is formed so that the leading edge 421 is formed as a smooth round in a front view, and in the lengthwise direction from the leading edge 421 to the tailing edge 429, the vertical width of the streamline increases from the vertex of the leading edge 421 to a position of "(3 to 4)/10" of the length of the streamline in conformity with the airfoil shape of the horizontal tail wing 400, and the vertical width of the streamline decreases from the position of "(3 to 4)/10" of the length of the streamline to the tailing edge 429 and finally sharply converges on the vertex of the tailing edge 429.

As previously described, the wing structure for a WIG craft is a bilaterally symmetric structure about the body of the WIG craft. Thus, even though a description is made of either the left or right wing structure, the other side of the wing structure also has the same structure as that described.

Thus, unlike other aircraft, the wing structure for a WIG craft is configured to maximize the ground (=the surface of the water) effect, which is characteristic to a WIG craft, without using the vertical tail wing, thereby minimizing vortices and induced drag, which are generated on the outer ends of the main wings, and the downward wing has much more volume than the end plate, thereby having advantages for absorbing impact when taking off and landing and ensuring stability with respect to rolling of the body.

The fourth embodiment of the wing structure for a WIG craft will now be described with reference to FIGS. 12 to 17.

The fourth embodiment illustrates the configuration in which while the shapes of the downward panel 310 and the rudder unit 320 are the same, the coupling structure thereof is different. That is, the vertical width of the rudder unit 320 is smaller than that of the downward panel 310, and the downward panel 310 is provided in the rear surface with a receiving groove 317 which is large enough to receive the rudder unit 320. Thus, the rudder unit 320 is mounted in the receiving groove 317 in the rear surface of the downward panel 310. In the wing structure for a WIG craft, the functions and shapes of the respective parts may be the same, so a detailed description thereof will be omitted.

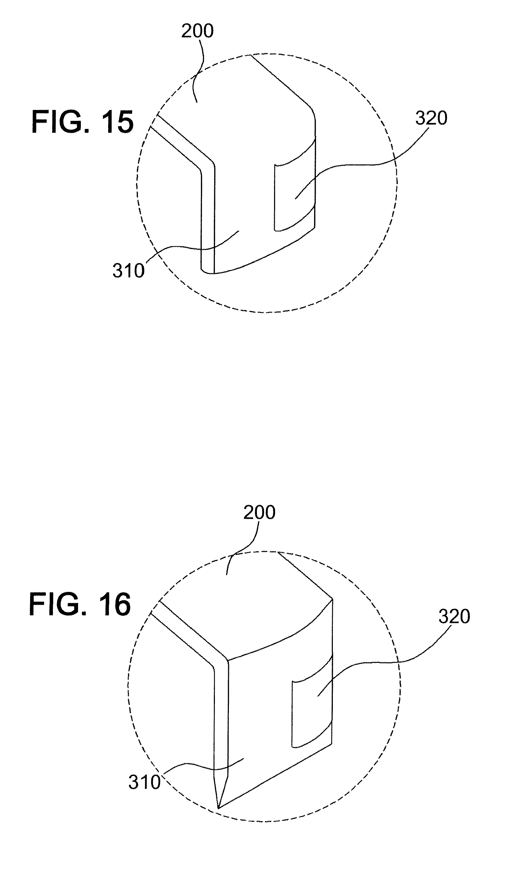

As shown in FIGS. 15 and 16, the shape of the lower portion is shaped like an arch, which is a round circular shape, or a streamlined "V." This is for upon movement of the WIG craft, maximally reducing friction with the surface of the water or the air layer on the water and maximizing lift and thrust effects more intensively. Such shapes only pertain to an illustrative example, so the invention is not limited to the illustrated shapes.

FIG. 17 is a side view showing a WIG craft according to the present invention without a vertical tail wing, and FIG. 18 is a conceptual scheme explaining the control of yawing using the downward wing according to the present invention.

As shown in FIG. 18, the vertical tail wing is removed so that it is possible to make the body of the WIG craft slim and streamlined while reducing the overall volume of the body. This configuration can be implemented by supplementing the control on the body of the WIG craft through the construction in which the rudder unit provided on the rear surface of the downward wing is movable to the left or right side according to air flow or fluid pressure as shown in FIG. 19. FIG. 19 is a cross-sectional view showing an airfoil-shaped wing using a lift face of an end plate. As shown in the drawing, in the present invention, the airfoil-shaped wing is provided, so that lift and thrust are easily increased according to air flow and a difference of air pressure.

Although the embodiments of the present invention have been disclosed for illustrative purposes, those skilled in the art will appreciate that various modifications, additions and substitutions are possible, without departing from the scope and spirit of the invention as disclosed in the accompanying claims. Therefore, the claimed scope of the present invention is not limited to the illustrated embodiments, but should be defined by following claims and their equivalences.

### [industrial Applicability]

Generally, aircraft uses a large vertical tail wing in order to secure stability with respect to yawing and compensate for asymmetry in thrust between left and right lateral ends. This is in conformity with aircraft regulations and is implemented for enabling the aircraft to operate even when either one of the left and right propellers malfunctions. However, since upon engine failure, WIG craft can make an emergency landing on the surface of the water and implement required emergency measures and corrective maintenance, unlike other aircraft, the WIG craft do not need a large vertical tail wing. Thus, provided that instead of the vertical tail wing, means for ensuring stability to yawing is presented, the body of the WIG craft can be streamlined by removing the vertical tail wing. However, a substitute for the vertical tail wing has been not yet developed. The WIG craft is currently being developed both domestically and internationally, and has a greater industrial applicability to a variety of fields such as a future means of transportation.

## Claims

1. A wing structure for a WIG craft comprising:
a main wing protruding outwards from the side middle portion of the body of the WIG craft;
a downward wing seamlessly extending vertically downwards from an outer end of the main wing;
a horizontal tail wing extending horizontally outwards from a rear portion of the body of the WIG craft; and
a vertical tail wing vertically extending from an axis of the body of the WIG craft where the horizontal tail wing is mounted,
wherein the downward wing has a vertical cross sectional shape of a streamline in which a frontal section including a leading edge is shaped like a round with a proper thickness in order to prevent flow separation from occurring, and a rear section including a tailing edge shaped like a converging section that converges from a thickened portion into the tailing edge that sharply extends in a linear line, wherein the thickened portion is positioned at a position of "(3 to 4)/10" from the leading edge in the length of the streamline in the lengthwise direction from the leading edge to the tailing edge.

2. A wing structure for a WIG craft, comprising:
a main wing protruding outwards from the side middle portion of the body of the WIG craft;
a downward wing seamlessly extending vertically downwards from an outer end of the main wing; and
a horizontal tail wing extending horizontally outwards from the rear portion of the body of the WIG craft,
wherein the downward wing includes a downward panel integrally extending downwards from the end of the main wing, and a rudder unit movably mounted onto a rear surface of the downward panel,
wherein the downward wing including the rudder unit has a vertical cross sectional shape of a streamline in which a frontal section including a leading edge is shaped like a round with a proper thickness in order to prevent flow separation from occurring, and a rear section including a tailing edge is shaped like a converging section that converges from a thickened portion into the tailing edge that sharply extends in a linear line, so that the entire downward wing has the vertical cross sectional shape of an airfoil.

3. The wing structure for a WIG craft according to claim 2, wherein the horizontal tail wing includes a horizontal safety plate as a fixed type horizontal panel, and a movable elevator unit mounted on a rear surface of the horizontal safety plate, wherein the elevator unit has a vertical cross sectional shape of a streamline in which a frontal section including a leading edge is shaped like a round with a proper thickness in order to prevent flow separation from occurring, and a rear section including a tailing edge is shaped like a converging section that converges from a thickened portion into the tailing edge that sharply extends in a linear line, so that the entire horizontal tail wing has the vertical cross sectional shape of an airfoil.

4. The wing structure for a WIG craft according to any one of claims 1 to 3, wherein the shape of a lower portion of the downward wing is shaped like an arch or a streamlined "V" so as to minimize the friction force against the surface of the water or air on the surface of the water.

5. The wing structure for a WIG craft according to claim 4, wherein the downward wing is made of carbon fiber aluminum.

6. The wing structure for a WIG craft according to any one of claims 1 to 3, wherein the main wing has an internal structure that includes a plurality of airfoil-shaped ribs, which is connected between the leading edge and the tailing edge, and a plurality of panel-shaped spars, which intersects with the ribs.
